# EUROPEAN PATENT APPLICATION

(11) **EP 3 239 898 A1**
(43) Date of publication of application: **01.11.2017**
(21) Application number: 16382183.8
(22) Date of filing: 27.04.2016
(51) Int. Cl.: G06K 9/00, G06T 7/00

(54) **METHOD FOR QUANTIFYING PROTEINS IN A SAMPLE**

(71) Applicant: Mercarista, S.L., 28232 Las Rozas de Madrid (ES)
(72) Inventor: HERRANZ RAUSELL, Jorge, 28232 Las Rozas de Madrid (ES); TRAMON NOHEDA, Luis, 28232 Las Rozas de Madrid (ES)
(74) Representative: Pons

(57) **Abstract**

A high-precision method is described in this document which enables the quantification of a quantity of proteins present in a certain sample. The method described herein is based on the capture and processing of images of the result of a densitometry process through the processing of said images and which, using image processing based on luminance or contrast, makes it possible to determine and quantify the proteins present in a sample. Subsequently, said proteins can similarly be identified by means of said proteins by means of comparison with known images of protein samples, taking into account that said images must be taken under the same conditions as the images captured of the result of a densitometry process.

## Description

### OBJECT OF THE INVENTION

The object of the invention falls within the technical field of analysis and characterisation of different types of samples.

More specifically, this document discloses a method for determining the quantity of proteins in a sample.

### BACKGROUND OF THE INVENTION

Protein electrophoresis or proteinogram is a semi-quantitative protein analysis method, frequently requested of many clinical laboratories. For an adequate use thereof, it is convenient to know the information provided by the proteinogram and its association with different diseases. Protein quantification is a procedure widely used on a daily basis in any laboratory that engages in medical or biochemical research. Practically all the advances and products developed in this scientific environment use this protocol to a greater or lesser extent: from basic physiology studies to the knowledge of diseases such as cancer, cardiovascular diseases, diabetes, etc.

The technique used to quantify proteins in research is known as Western Blotting. This detection is made based on qualitative, not quantitative, sampling to compare the protein expression in different experimental groups (e.g.: healthy vs diabetic, control vs cancer, etc.). The Western Blot, immunoblot or electrotransfer is used to detect specific proteins in a certain sample (a complex mixture of proteins, such as a tissue extract). To this end, the proteins are separated by means of gel electrophoresis based on the desired criteria: molecular weight, structure, hydrophobicity, etc. They are subsequently transferred to an absorbent membrane (typically made of nitrocellulose or PVDF) in order to search for the protein of interest using specific antibodies against it. Lastly, the antigen-antibody union is detected by enzyme activity or fluorescence, among other methods. In this same manner, the presence of the protein in the extract can be studied and the relative quantity thereof with respect to the other proteins analysed.

The results of the experiments are expressed by means of stains (blots) that represent protein density, since the intensity of the stain is proportional to the quantity of the protein in each group. Based on the quantification of these images, the data of each group are obtained, together with graphics representing the different protein expression differences between the different groups. These images and data are used for publication thereof in indexed scientific magazines that endorse the results obtained.

Densitometry is used to quantify the quantity of protein found in a certain spectrum. For this particular case, there are calculation programs that can perform this task, particularly Scion Image and ImageJ. Therefore, protein quantification is performed through the study of images obtained in the Western Blot process and requires arduous work by the researcher performing it; work the results of which are not always optimal and also entails a waste of work time of research personnel.

### DESCRIPTION OF THE INVENTION

The object of the invention is a method for quantifying molecules, such as proteins, which makes it possible to carry out said quantification effectively and solving the aforementioned problems.

To this end, use is made of an image resulting from a Western blot or electrotransfer, which is processed by means of algorithms for detecting images by means of logarithmic luminance increment; this implies that the result exceeds that already known in terms of data validity and precision.

The method described herein enables the processing of images without need to scan the image or to pre-process or convert its format, since real-time image capture can be performed using a device equipped with a camera and which in turn implements the method described herein.

The result of the method of the invention can be uploaded to a database for formulating and processing predefined information for the numerical processing of the results obtained from the images.

Likewise, the possibility of manually fixing the ratio obtained on comparing the densitometry data obtained from the photography of the reference molecule with those of the molecule to be subject to densitometry is envisaged; with this ratio the deviation of the algorithm between samples can be calibrated or parameterised for the purpose of adjusting said calibration.

It should be noted that the method described herein implements the use of artificial neural networks (ANN or Artifical Neural Networks) to carry out the described processes; this gives rise to a method that learns while it being endowed with prediction and adaptation capabilities

### DESCRIPTION OF THE DRAWINGS

In order to complement the description being made and with the object of helping to better understand the characteristics of the invention, according to a preferred embodiment thereof, said description is accompanied, as an integral part thereof, by a set of drawings where, in an illustrative and non-limiting manner, the following has been represented:
Figure 1 shows a capture of the films obtained from the development, which are destined to be subject to densitometry.
Figure 2 shows an image capture wherein the selection of the area to be subject to densitometry, an area shown inside a grey rectangle, can be observed.
Figure 3 shows an image capture of the protein to be subject to densitometry en figure 3a, while figure 3b shows a reference sample.
Figure 4a shows an image capture wherein details of the quantification can be observed in such a manner that the protein to be quantified is shown in figure 4a, while figure 4b shows an image capture wherein the reference protein can be observed.

### PREFERRED EMBODIMENT OF THE INVENTION

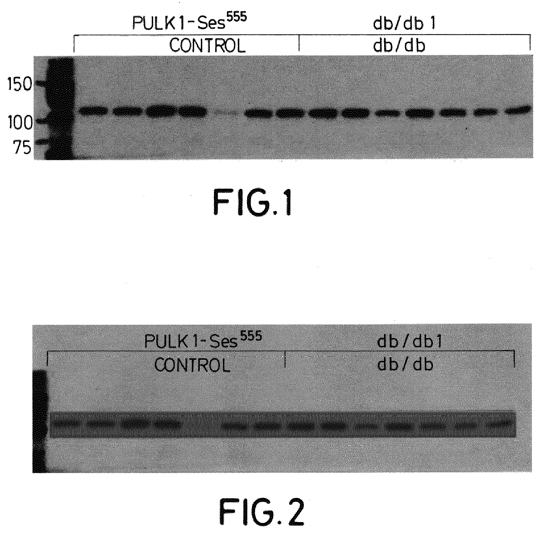

The protein quantification method in a sample, such as that observed in figure 1, object of the invention, is initiated by means of an image capture of the result of electrotransfer in a sample making use of image capture means.

Said image is processed by means of densitometry, making use of a processing unit wherein said image processing comprises image processing by means of logarithmic luminance increment, thereby determining dark, grey or black areas and their intensity in the image, once said dark areas that exceed a certain threshold are identified, such as a threshold value of white or contrast, a number of dark areas comprised in the image, can be determined, using processing unit, thereby obtaining a processed proteinogram. That is, according to a shade of white as of the captured image, it is understood that the total absence of protein, any colour level above that white level, corresponds to the presence of a protein; said threshold value depends on a calibration of white colour at the time of the image capture.

By means of the processing unit, each dark area of an area of the selected image, as shown in figure 2, is assigned the presence of a protein in the image, thereby determining a quantity of molecules that exists in the sample by means of a correlation between dark areas and number of proteins.

Subsequently, the protein can be identified or the proteins quantified by comparison with a reference image of said protein. Said comparison can be made in such a manner that a reference image of the protein is captured at the same time that an image of the result of the electrotransfer in a sample is captured, such that at least the lighting conditions coincide in the two captures. In possible alternative embodiments wherein the reference image of the protein cannot be captured at the same time that the image capture of the result of electrotransfer in a sample cannot be performed, an image downloaded from a database may be taken as a reference image, taking into account the possible variations as to the parameters of exposure to the captured image; changes may be made in the method of the invention if said parameters do not coincide with those of the image capture of the result of electrotransfer.

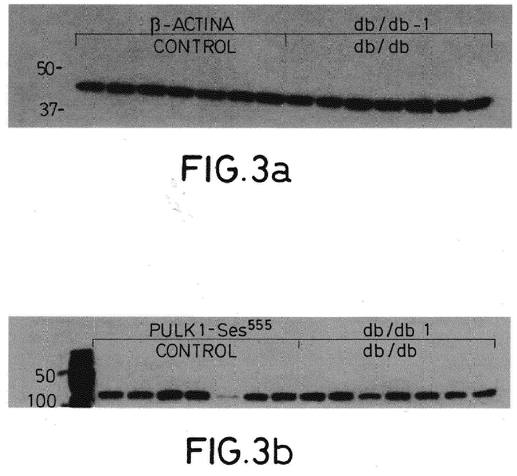

This comparison shown in figures 3a and 3b may be used to perform a calibration by comparison of the densitometry data of the image of the reference molecule with those of the image capture of the result, which it processes by means of densitometry.

The result of the method object of the invention may be uploaded to databases accessible through the electronic devices of different users, such that the consultation of the results may be performed immediately and also makes it possible to use said results as samples, once verified, of proteins for comparison purposes.

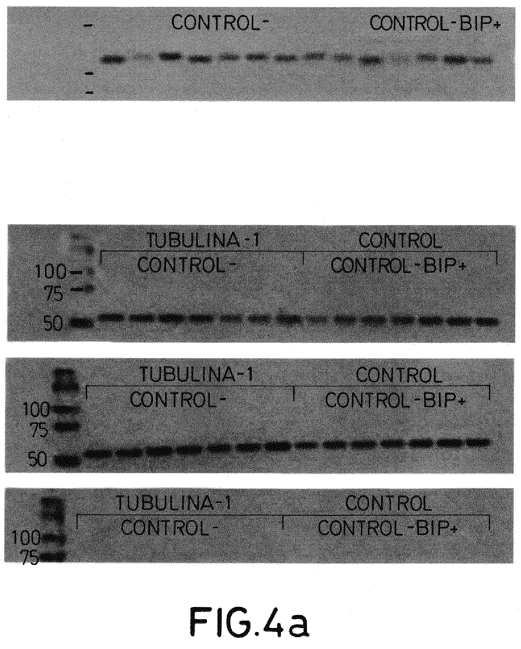

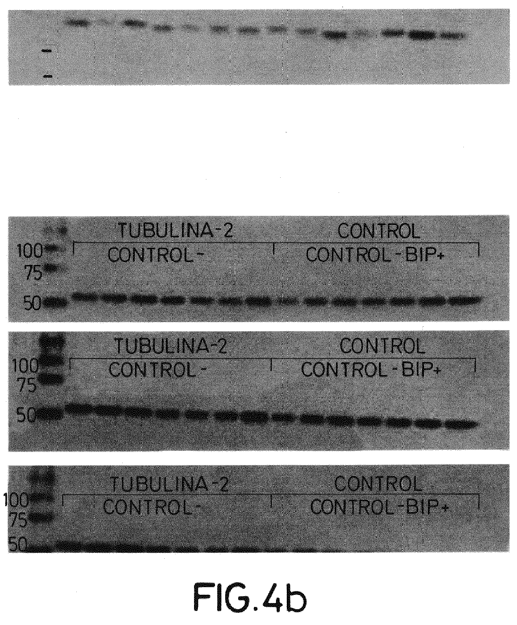

The results such as those observed in figures 4a and 4b may easily be uploaded to productivity tools commonly used by research teams, which make it possible to perform research work implying collaborative protein quantification.

The entire process can be carried out using an artificial neural network, such that the processing unit may form part of said network or be distributed therein. The use of a neural network in the method described herein implies that the method has learning capacity and greater capacity to predict results while making it possible to accelerate the necessary processes for carrying out the invention.

## Claims

1. A method for quantifying proteins in a sample, **characterised in that** it comprises:
i. capturing, by means of image capture means, an image of the result of electrotransfer in a sample,
ii. processing the image capture of the result by means of densitometry, using a processing unit wherein said process comprises a logarithmic luminance increment, thereby determining dark, grey or black areas and their intensity in the image,
iii. determining, using the processing unit, a number of dark areas comprised in the image,
iv. assigning, using the processing unit, the presence of a protein in the image to each dark area, and
v. determining, using the processing unit, a quantity of protein that exists in the sample by means of a correlation between dark areas and number of proteins.

2. A method according to claim 1, **characterised in that** it additionally comprises capturing a reference image of the protein in a sample while capturing an image of the result of electrotransfer in a sample, such that at least the lighting conditions coincide in the two captures.

3. The method according to claim 2, **characterised in that** it comprises comparing the reference image of the protein with the image of the result of electrotransfer to determine the quantity of protein found in the image of the result of electrotransfer.

4. The method according to any one of the preceding claims, **characterised in that** it additionally comprises performing a calibration by comparison of the densitometry data of the reference protein image with those of the image capture of the result, which it processes by means of densitometry in step ii).

5. The method according to any one of the preceding claims, **characterised in that** the step of determining the number of dark areas which, comprised in the image, comprise stipulating as a dark area any area whose intensity is greater than a threshold value that depends on a calibration of white colour at the time of image capture.

6. The method, according to any one of the preceding claims, **characterised in that** the processed unit forms part of an artificial neural network.
